# EUROPÄISCHE PATENTSCHRIFT

(11) **EP 1 574 257 B1**
(45) Veröffentlichungstag und Bekanntmachung des Hinweises auf die Patenterteilung: **21.02.2007**
(21) Anmeldenummer: 04026318.8
(22) Anmeldetag: 17.12.2003
(51) Int. Cl.: B01L 7/00, H05B 6/80, B01F 9/10

(54) **Vorrichtung zum Erhitzen von einem in einem Behälter befindlichen Stoff**
Device for heating a substance within a container
Dispositif pour chauffer une substance contenue dans un récipient

(43) Veröffentlichungstag der Anmeldung: 14.09.2005
(62) Teilanmeldung aus: 03029067.0
(73) Patentinhaber: Mikrowellen-Systeme MWS GmbH, 9435 Heerbrugg (CH)
(72) Erfinder: Lautenschläger, Werner, 88299 Leutkirch (DE)
(74) Vertreter: Rupp, Christian

(56) Entgegenhaltungen:
- EP-A- 0 423 925
- DE-A- 19 543 401
- US-A- 4 092 512
- US-A- 4 167 661

## Beschreibung

Die Erfindung bezieht sich auf ein Verfahren und eine Vorrichtung zum Betrieb einer Heizvorrichtung zum Erhitzen von in einem Behälter befindlichen Stoff.

Es ist zum Erwärmen durch Mikrowellen-Strahlung wenigstens eines sich in einem Behälter befindlichen Stoffes bekannt, den Behälter mit einem Behälter-Träger im Heizraum kreisförmig zu bewegen, um eine gleichmäßige Erwärmung bzw. Erhitzung des Stoffes zu erreichen. Als Träger kann z.B. eine Drehscheibe dienen, auf der sich zur gleichzeitigen Bewegung von mehreren Behältern auf dem Umfang verteilt angeordnete Standplätze für die Behälter befinden. Die Halterung des wenigstens einen Behälters durch den Träger kann jedoch auch auf andere Weise, z.B. hängend, erfolgen.

Um außerdem während des Erwärmungsvorgangs im wesentlichen gleichmäßige Temperatur- und Vermischungszustände im Stoff zu gewährleisten, ist es auch bereits bekannt, in den Behälter einen Magnet-Rührer einzusetzen, der in Rotation versetzt wird, um den Stoff durch Rühren zu vermischen und/oder die Vermischung beizubehalten.

Dazu muss in jedem Behälter ein eigener Rührer eingesetzt und dann angetrieben werden (siehe beispielsweise DE 197 00 499 A1). Ein weiterer Nachteil dieser bekannten Rührer ist es, dass sie in schmalen Behältern (Reagenzglas etc.) nur schwer einführbar sind und dann dazu neigen, sich senkrecht aufzustellen, anstelle die horizontale Lage beizubehalten, die für ein ordnungsgemässes Rühren notwendig ist. Schliesslich ist es hinsichtlich einer Automatisierung von Laborprozessen nahezu unmöglich, derartige Rührer von einem Roboter einzusetzen und dann wieder herausnehmen zu lassen. Schliesslich besteht stets die Gefahr, dass Metallionen aus dem magnetischen Kern des Rührers durch die Kunsstoff-Hülle nach Aussen gelangen und somit eine Verunreinigungsquelle darstellen. Bei einer Sedimentbildung in dem Behälter besteht die Gefahr, dass der Rührer das Sediment nicht mehr auflösen kann und vielmehr lediglich an der Oberfläche des Sediments kratzt.

Bei einer vorliegenden Heizvorrichtung ist ein Bewegungsantrieb für den Träger des wenigstens einen Behälters problematisch, weil die Teile eines im Heizraum angeordneten Bewegungsantriebs durch die Strahlung ebenfalls erwärmt werden, wenn sie aus die Strahlung absorbierendem Material bestehen. Eine Fertigung dieser Teile aus die Bestrahlung nicht absorbierendem Material ist jedoch nicht sinnvoll oder auch nicht möglich. Man ist deshalb dazu übergegangen, den Bewegungsantrieb für die Hauptbewegung unter dem Gehäuse anzuordnen und die Bodenwand des Gehäuses mit Antriebselementen, z.B. eine Welle, in einem Durchführungsloch zu durchgreifen und antriebsmäßig mit dem Träger zu verbinden. Dies führt zu einer aufwendigen Konstruktion und ist dann erschwert oder kaum möglich, wenn für diesen Bewegungsdurchgriff durch die Bodenwand nur ein beengter Raum zur Verfügung steht.

Aus der US 4,092,512 ist eine Antriebsvorrichtung für einen Drehtisch in einem Mikrowellenherd bekannt. Eine rotierende Drehplatte wird dabei mithilfe eines magnetischen Durchgriffs bewegt, wobei Antriebsmagnete, die außerhalb der Heizkammer rotierend gelagert sind, mit Flachmagneten an der Drehplatte zusammenwirken.

Der Erfindung liegt die Aufgabe zugrunde, eine Vorrichtung und ein Verfahren zum Erwärmen wenigstens eines Stoffes in einer Heizkammer durch Strahlung so weiterzubilden, dass sie sich besser für automatisierte Abläufe eignen.

Diese Aufgabe wird durch die Merkmale der unabhängigen Ansprüche gelöst.

Bei der erfindungsgemäßen Ausgestaltung ist der Träger durch einen magnetischen Durchgriff bewegbar, der wenigstens zwei Antriebsmagnete aufweist, die außerhalb des Gehäuses angeordnet und auf einer der Bewegungsbahn des Trägers im wesentlichen entsprechenden Bewegungsbahn bewegbar gelagert sind. Bei dieser erfindungsgemäßen Ausgestaltung bedarf es keiner starren Verbindung mit dem Träger und deshalb auch keines mechanischen Durchgriffs durch die Bodenwand des Gehäuses. Ein weiterer Vorteil dieser erfindungsgemäßen Ausgestaltung besteht darin, daß der Magnetantrieb Abweichungen (Schlupf) zwischen den Bewegungsbahnen des Trägers und des Antriebsmagneten zuläßt. Hierdurch läßt sich die Konstruktion der Vorrichtung vereinfachen, und es entstehen keine Zwängungen beim Bewegungsablauf, wie es bei einem mechanischen Antrieb der Fall wäre. Außerdem läßt der magnetische Antrieb eine von der Hauptbewegungsrichtung abweichende Schüttelbewegung in einfacher Weise zu, und er eignet sich deshalb insbesondere für einen solchen Antrieb mit überlagerter Schüttelbewegung.

Die erfindungsgemäße Ausgestaltung ermöglicht es auch im weiteren einen Antrieb, z.B. einen Elektroantrieb in einfacher Weise außerhalb des Gehäuses anzuordnen und antriebsmäßig mit dem Antriebsmagneten zu verbinden, um diesen zu bewegen.

Um eine nicht einseitig auf die Lager wirkende Antriebskraft zur Verfügung zu stellen, ist es vorteilhaft, am Magnethalter und am Träger jeweils wenigstens zwei oder mehrere einander in der Ebene der Bewegungsbahn gegenüberliegend angeordnete Magnete auf der Bewegungsbahn verteilt anzuordnen, insbesondere jeweils in einen Teilkreis bei einem Drehantrieb. Erfindungsgemäß sind diese Magnetpaare jeweils mit unterschiedlicher Polung angeordnet. Dadurch ergibt sich eine für eine Automatisierung günstige Positionskodierung.

Die Erfindung umfaßt weitere Weiterbildungsmerkmale, die eine kleine, kostengünstig herstellbare und dabei sicher funktionierende Konstruktion ermöglichen. Andere Weiterbildungsmerkmale betreffen einen Wärmeschutz für zusätzliche, die Bodenwand des Gehäuses von unten durchgreifende Antriebselemente.

Nachfolgend werden das erfindungsgemäße Verfahren und die erfindungsgemäße Vorrichtung anhand von vorteilhaften Merkmalen wenigstens eines Ausführungsbeispiels und anhand von Zeichnungen näher erläutert. Es zeigt:

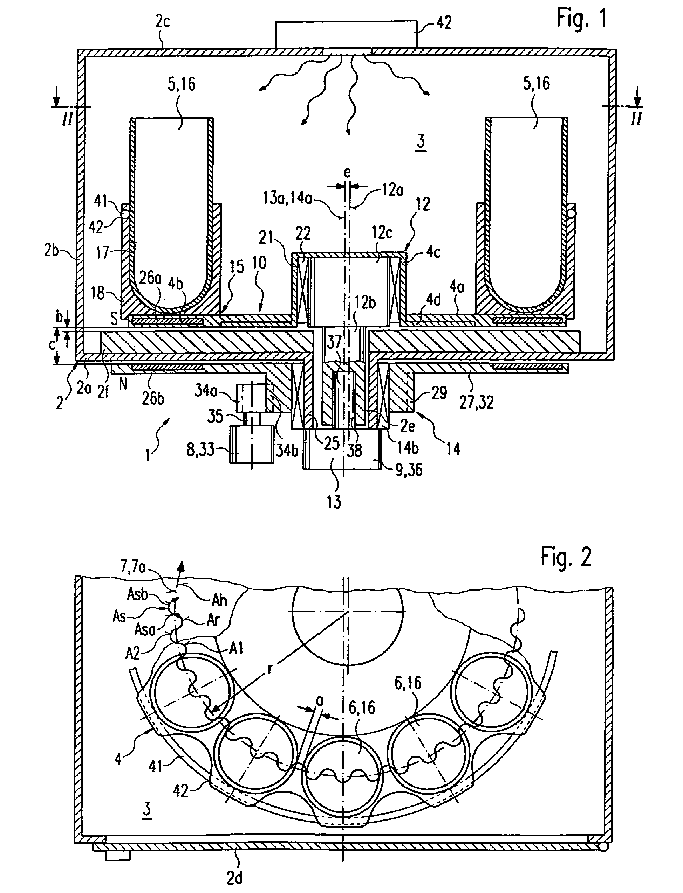

- Fig. 1: eine erfindungsgemäße Heizvorrichtung zum Erhitzen von einem in wenigstens einem Behälter befindlichen Stoff im vertikalen Schnitt;
- Fig. 2: einen Teil der Vorrichtung im horizontalen Schnitt gem. Linie II-II in Fig. 1.

Die Hauptteile der in ihrer Gesamtheit mit 1 bezeichneten Heizvorrichtung sind ein Gehäuse 2 mit einer im wesentlichen horizontalen und ebenen Bodenwand 2a, einer Umfangswand 2b sowie einer im wesentlichen horizontalen und z.B. ebenen Deckenwand 2c, die zusammen eine geschlossene Heizkammer 3 umgeben, die durch eine wahlweise zu öffnende und zu verschließende Tür 2d von außen zugänglich ist. Im Bodenbereich der Heizkammer 3 ist wenigstens ein Träger 4 für einen oder mehrere Behälter 5 für einen mit Wärme zu behandelnden Stoff 6 beweglich gelagert.

Der Träger 4 und somit die mit ihm bewegunsfesten Behälter 5 können in der Heizkammer 3 eine Bewegung ausführen, die sich aus einer Hauptbewegung Ah und einer der Hauptbewegung Ah überlagerten Schüttelbewegung As zusammensetzt. Die Hauptbewegung Ah ist periodisch und umfaßt wenigstens zwei gleiche oder ungleiche Bewegungsabschnitte, auf denen der Träger 4 regelmäßig oder unregelmäßig zu einem Ausgangspunkt wiederkehrt. Die Hauptbewegungsrichtung ist mit 7 bezeichnet. Beim Ausführungsbeispiel ist die Hauptbewegung Ah eine umlaufende Bewegung, vorzugsweise eine auf einer Kreislinie umlaufende Umlaufbewegung, und kann somit durch eine um eine im wesentlichen vertikal verlaufende Drehachse verlaufende Drehung oder Hin- und Herbewegung des Trägers 4 erreicht werden. Alternativ kann die Hauptbewegung bspw. auch eine translatorische Hin- und Herbewegung sein. Die die resultierende Bewegung Ar erzeugende Bewegungsvorrichtung ist in ihrer Gesamtheit mit 10 bezeichnet.

Im Falle einer Erwärmung durch Mikrowellen ist die Hauptbewegung derart gewählt, daß jeder Behälter während der Zeitdauer der Behandlung solche Bereiche unterschiedlicher Strahlungsintensität durchläuft. Die Schüttelbewegung As ist beim Ausführungsbeispiel eine periodische zickzackförmige oder schlangenförmige Bewegung, deren wenigstens abschnittsweise quer zur Hauptbewegungsrichtung 7 verlaufende Querkomponenten Asa, Asb die Amplituden A1, A2 aufweisen und eine zugehörige Abszisse, hier die Kreislinie 7a, kreuzen. Die Amplituden At der Schüttelbewegung As sind kleiner als die Amplitude der Hauptbewegung Ah, die bei einer Kreisbewegung dem Radius r entspricht.

Die Frequenz der Schüttelbewegung ist grösser als die der Hauptbewegung.

Es ist der Zweck der Schüttelbewegung As, das insbesondere flüssige oder fließfähige Material 6 im Behälter 5 im Funktionsbetrieb der Vorrichtung 1 in Bewegung zu halten, um z.B. eine Sedimentation zu vermeiden und eine Vermischung des Stoffes 6 zu gewährleisten.

Es ist zur Steigerung der Leistungsfähigkeit der Vorrichtung 1 vorteilhaft, mehrere Träger 4 vorzusehen, die auf der Hauptbewegungsbahn verteilt angeordnet sind. Beim Ausführungsbeispiel sind mehrere Träger 4 auf der Kreislinie 7a verteilt angeordnet, wobei der Träger 4 durch eine Scheibe 4a oder einen Ring gebildet sein kann.

Eine kreisförmige Hauptbewegung Ah läßt sich wie gesagt in konstruktiv einfacher und raumsparender Weise dadurch erreichen, daß der Träger 4 in einem ersten Drehlager 12 um eine erste vorzugsweise im wesentlichen vertikale Drehachse 12a drehbar gelagert ist. Ein noch zu beschreibender zugehöriger Antrieb ist mit 8 bezeichnet.

Die Schüttelbewegung As läßt sich in einfacher Weise dadurch erreichen, daß der wenigstens eine Träger 4 quer zur Hauptbewegung hin und her bewegt wird. Die Frequenz dieser Schüttelbewegung As beträgt ein mehrfaches der Drehzahl des Trägers 4 um die Drehachse 12a. Die Frequenz kann z.B. wenigstens das zehnfache oder mehr der Drehzahl betragen.

Beim Ausführungsbeispiel wird die Schüttelbewegung As dadurch erzeugt, daß der Träger 4 auf einer vorzugsweise kreisförmigen Planetenbahn bewegt wird, insbesondere dadurch, daß der Träger 4 mit seiner Drehachse 12a auf einer vorzugsweise kreisförmigen Planetenbahn bei seiner Hauptbewegung Ah gleichzeitig um eine zur Drehachse 12a exzentrische Drehachse 13a eines zweiten Drehlagers 13 bewegt wird. Dies wird in vorteilhafter Weise dadurch erreicht, daß die Lagerachse des ersten Drehlagers 12 eine Welle ist, die um die exzentrische Drehachse 13a drehbar gelagert ist. Das Exzenter-Mass stellt in diesem Fall die Amplitude der Schüttelbewegung dar.

Eine räumlich günstige Lagerstelle für das zweite Drehlager 13 ist unterhalb des Gehäuses 2. Die Welle 12b kann dabei in einfacher Weise die Bodenwand 2a nach unten in einem Loch 2e durchfassen und mit dem Schüttelbewegungs-Antrieb 9 in Verbindung stehen. Das zweite Drehlager 13 kann somit in diesen zweiten Antrieb 9 integriert sein.

Die Frequenz der Schüttelbewegung As ist so groß, daß auf den im Behälter 5 befindlichen Stoff 6 eine Schüttelbewegung ausgeübt wird, aufgrund der der Stoff 6 sich im Behälter 5 hin- und her verlagert und somit eine Durchmischung erfährt. Wenn die zweite Bewegung 7b eine Kreisbewegung ist, wird darüber hinaus eine Rührbewegung des Stoffes 6 erzeugt.

Es ist außerdem vorteilhaft, den Träger 4 zur Ausführung seiner Hauptbewegung Ah mittels eines magnetischen Durchgriffs 8 durch die Heizraumwand anzutreiben. Zum einen ist es dadurch möglich, einen zugehörigen Antriebsmotor sowie einen Antriebsmagneten außerhalb des Gehäuses 2 anzuordnen, wobei die elektromagnetischen Antriebskräfte durch die Wand des Gehäuses 2 hindurch wirksam sind. Hierdurch ist es möglich, die Mehrzahl der den Antrieb bildenden Teile außerhalb vom Gehäuse 2 anzuordnen, wo sie der Wärme der Heizkammer 3 weitgehend entzogen sind und so ein größerer Bauraum zur Verfügung steht.

Ein weiteren Vorteil eines magnetischen Antriebs besteht darin, daß er aufgrund des Fehlens einer starren Verbindung zwischen den Antrieb 8 und dem Träger 4 Schlupf und insbesondere die quer zur Hauptbewegungsrichtung 7 verlaufenden Querbewegungen bzw. Schüttelbewegung As gestattet.

Beim vorliegenden Ausführungsbeispiel ist ein Träger 4 vorgesehen, der in dem ersten Drehlager 12 um die Drehachse 12a drehbar gelagert ist und auf beiden Seiten der Drehachse 12a und auf seinem Umfang verteilt mehrere Stellplätze 15 für vorzugsweise einander gleich ausgebildete Behälter 5 aufweist. Es können auf einem Teilkreis in einem geringen Abstand a voneinander angeordnete Behälter 5 vorgesehen sein, z.B. bis etwa 14 Behälter.

Der Behälter 5 kann durch ein im Querschnitt vorzugsweise rundes, oberseitig offenes Gefäß 16 gebildet sein, das mit einem Standfuß auf dem zugehörigen Stellplatz 15 steht. Der Behälter 5 kann aber auch mit geringem Bewegungsspiel in einem Aufnahmeloch 17 sitzen, das in einem den Träger 4 bildenden Trägerbasisteil 18 angeordnet ist, daß z.B. ein hochstehendes Rohr des Trägers 4 sein kann oder eine hochstehende und sich in der Umfangsrichtung durchgehend erstreckende Ringwand sein kann. Das Basisteil 18 ist z.B. speichenförmig oder durch eine Scheibe 4a mit einer Nabe 21 verbunden, in der das erste Drehlager 12 ausgebildet ist. Dieses kann ein Gleit- oder Wälzlager 22 sein, das zwischen der Nabe 21 und einer Achse oder Welle 12b angeordnet ist, die sich vom Drehlager 12 nach unten mit Bewegungsspiel durch das Loch 2e in der Bodenwand 2a und einer Lagerbuchse 25 für ein drittes Drehlager 13 für den Magnet-Antrieb 8 erstreckt. Das dritte Drehlager 13 ist beim Ausführungsbeispiel unter der Bodenwand 2a angeordnet ist, wobei die Lagerbuchse 25 an der Bodenwand 2a befestigt ist und von dieser nach unten absteht. Das Basisteil 18 bzw. die Scheibe 4a weist einen vertikalen Abstand b von der Bodenwand 2a oder einer darauf liegenden Platte 2f auf.

Beim Ausführungsbeispiel ist der Hauptbewegungs-Antrieb 8 für den Träger 4 der magnetische Bewegungsantrieb mit wenigstens zwei Magneten 26a, 26b, von denen der erste Magnet 26a am Träger 4 angeordnet ist und der zweite Magnet 26b als Antriebsmagnet der vorzugsweise kreisförmigen Umlaufbahn des ersten Magneten 26a gegenüberliegend an einem außerhalb des Gehäuses 2 angeordneten Antriebsdrehteil 27 angeordnet ist, das in einem dritten Drehlager 14 um eine Drehachse 14a drehbar ist, die im Bereich der Drehachsen 12a und 13a etwa vertikal verläuft, z.B. koaxial mit der Drehachse 13a des zweiten Drehlagers 13. Das Antriebsdrehteil 27 weist eine Nabe 29 auf, die vorzugsweise nach unten absteht und durch ein Gleitlager oder Wälzlager 14b auf der Lagerbuchse 25 drehbar gelagert ist. Auch das Antriebsdrehteil 27 ist scheibenförmig ausgebildet, z.B. mit einer etwa horizontalen Scheibe 32, die mit dem oberen Rand der Nabe 29 verbunden ist und von dieser in Form eines Flansches radial absteht.

Die Magnete 26a, 26b sind vorzugsweise Flachmagnete, wobei wenigstens das eine Magnet 26a an der Unterseite des Trägers 4 oder Trägerbasisteils 18 oder der Scheibe 4a angeordnet ist, vorzugsweise darin eingebettet und durch eine unterseitige Materialschicht 4b abgedeckt sein kann. Das zweite Magnet 26b bzw. Antriebsmagnet ist an der Oberseite des Antriebdrehteils 27 angeordnet und vorzugsweise darin versenkt, wobei ihre Oberseiten miteinander abschließen können. Der vorzugsweise vertikale Abstand c zwischen den Magneten 26a, 26b beträgt insbesondere weniger als etwa 15 mm, z.B. etwa 5 mm.

Das Antriebsdrehteil 27 ist durch einen Elektromotor 33 antreibbar, der antriebsmäßig mit dem Antriebsdrehteil 27 verbunden ist, z.B. durch miteinander hämmernde Zahnräder 34a, 34b, von denen das eine auf einer Antriebswelle 35 des Motors 33 sitzt und ein Ritzel sein kann, das mit einem das Zahnrad 34b bildendenden Zahnkranz kämmen kann, der unterseitig mit dem Antriebsdrehteil 27 und/oder mit der Lagerbuchse 29 verbunden ist.

Der zweite Bewegungsantrieb 9 weist einen Elektromotor 36 auf, der die Welle 12b z.B. dadurch antreibt, daß sie mit der Abtriebswelle 37 des Motors 36 verbunden ist. Hierzu kann die Welle 12b ein bezüglich der zweiten Drehachse 13a koaxiales Aufnahmeloch 38 aufweisen, mit dem sie auf der Abtriebswelle 37 sitzt und damit drehfest verbunden ist, z.B. durch eine Keil-Verbindung. Der das erste Drehlager 12 bildende Lagerkopf 12c ist bezüglich der Welle 12b um die Exzentrizität e der Drehachsen 12a, 13a exzentrisch angeordnet. Der Elektromotor 36 kann z.B. an der Lagerbuchse 25 befestigt sein.

Im Rahmen der Erfindung können zwei Magnete 26a, 26b ausreichen, um eine magnetische Mitnahmekraft zu erzeugen, die so groß ist, daß bei einer Rotation des Antriebsdrehteils 27 der Träger 4 in der Hauptbewegungsrichtung 7 mitgenommen wird. Um die Mitnahmekraft zu vergrößern, ist es vorteilhaft, mehrere, z.B. wenigstens zwei Magnete 26a, 26b auf dem Umfang verteilt anzuordnen, wodurch mehrere auf dem Umfang verteilt angeordnete Angriffspunkte für die Mitnahmekraft geschaffen werden. Die Magnete 26a,26b, z.B. Permanentmagnete wie Neodym-Magnete, weisen jeweils eine umgekehrte Polarität auf. Wenn somit das antreibende Antriebsteil 27 gedreht wird, nehmen diese mittels der magnetischen Mitnahmekraft den Träger 4 mit dem oder den Behältern 5 mit.

Beim Ausführungsbeispiel mit mehreren, z.B. zwei segmentförmigen Magneten 26a, 26b erfolgt mittels der Polarität der Magnete eine Positionscodierung. Indem jeweils der eine Magnet 26a eine Süd- und der andere Magnet 26b eine Nord-Polarität S, N aufweist, und gleiches auch für die wenigstens zwei Magnete 26a des Trägers 4 gilt, wird sich bei Beginn des Drehvorgangs das Antriebsdrehteil 27 solange drehen, bis sich der Nord-Magnet des Trägers 4 im wesentlichen unterhalb des Süd-Magneten des Antriebsdrehteils 27 befindet und somit gleichzeitig auch der Süd-Magnet des Antriebsdrehteils 27 sich im wesentlichen unterhalb des Nord-Magneten des Trägers 4 befindet. Das Vorsehen von jeweils zwei Magneten 26a, 26b hat indessen den Vorteil, daß die axialen Kräfte ausgeglichen sind und somit das dritte Drehlager 14 weniger belastet ist.

Die Heizvorrichtung 1 ist vorzugsweise eine Mikrowellen-Heizvorrichtung, bei der zur Erzeugung der angestrebten Wärme in der Heizkammer 3 durch einen Generator 42 erzeugte Mikrowellen in die Heizkammer 3 eingekoppelt werden.

Für einen Funktionsbetrieb wird wenigstens der erste Bewegungsantrieb 8 eingeschaltet, der den Träger 4 bzw. das oder die von ihm getragenen Behälter 5 auf der Bewegungsbahn in der Hauptbewegungsrichtung 7 bewegt, die vorzugsweise kreisförmig ist und den wenigstens einen Behälter 5 umlaufend durch die Heizkammer 3 bewegt. Hierdurch wird eine gleichmäßige Beaufschlagung des Stoffes 6 mit Mikrowellen und somit eine gleichmäßige Erhitzung des Stoffes 6 erreicht. Die Heizvorrichtung 1 ist somit funktionsfähig, um Gemische oder physikalische Prozesse im Material 6, z.B. Probematerial, auszulösen und/oder zu fördern.

Gleichzeitig wird der Träger 4 mit seiner Drehachse 12a durch den zweiten Bewegungsantrieb 9 auf einer vorzugsweise kreisförmigen Planetenbahn um die Drehachse 13a bewegt, wodurch aufgrund der Exzentrizität e die quer zur Hauptbewegungsrichtung 7 gerichteten Amplitudenbewegungen Asa, Asb erzeugt werden. Die Frequenz bzw. Drehzahl oder Geschwindigkeit der Schüttelbewegung As ist so groß, daß bei dem Entfernen und wieder Nähern eine hin- und hergehende Fliehkraft auf den Stoff 6 ausgeübt wird, die so groß ist, daß der Stoff 6 sich im Behälter 5 hin- und her bewegt, was zu einer Vermischung des Materials beiträgt. Die Welle 12b wird durch eine entsprechend hohe Drehzahl angetrieben. Im Funktionsbetrieb wird der Träger 4 nicht nur um die erste Drehachse 12a gedreht, sondern diese Drehachse 12a wird gleichzeitig mit höherer Frequenz bzw. Drehzahl um die zweite Drehachse 13a gedreht. Der Träger 4 führt dabei eine vorzugsweise kreisförmige Planetenbewegung und gleichzeitig eine überlagerte Exzenterbewegung aus, die nicht nur zu der Schüttelbewegung As, sondern auch aufgrund der Drehung eine in der Umfangsrichtung des Behälters 5 gerichteten Rührbewegung im Stoff 6 erzeugt.

Die Exzentrizität e ist klein und beträgt weniger als etwa 5 mm, z.B. 1 mm bis 2 mm. (Die Amplitude der Hauptbewegung liegt im Vergleich dazu in einem Bereich von wenigstens einigen Zentimetern).

Die Drehzahl des Trägers 4 bezüglich der Drehachse 12a beträgt beispielsweise zwischen 1 und 30 U/min. Bei der Exzenter-Drehung kann die Drehzahl beispielsweise zwischen etwa 20 und 2000 U/min liegen.

Die sich in der Heizkammer 3 befindlichen Teile der Vorrichtung 1, die durch die Mikrowellen-Bestrahlung nicht erhitzt werden sollen, wie z.B. der oder die Behälter 5 sowie die Trag- und Antriebsteile, bestehen aus für Mikrowellen durchlässigem Material, insbesondere Kunststoff.

Um für das erste Drehlager 12 Metall, z.B. ein Wälzlager, verwenden zu können, weist die Scheibe 4a in ihrem mittleren Bereich ein Scheibenteil 4c aus Metall, z.B. Stahl, auf, an bzw. in dem das Drehlager 12 angeordnet ist und an dem der äußere Scheibenteil befestigt ist und z.B. auf einem unteren Flansch 4d des Scheibenteils 4c aufliegt. Das Scheibenteil 4c schirmt das Drehlager 12 vor der Bestrahlung ab.

Zur Sicherung der Behälter 5 kann ein sie mit einer kleinen Zugspannung umringendes Band 41 vorgesehen sein, das z.B. in Nuten 42 im Trägerbasisteil 18 angeordnet ist, die die Wand so tief durchsetzen, daß das Band 41 gegen die Behälter 5 drückt.

## Patentansprüche

1. Vorrichtung zum Erwärmen wenigstens eines Stoffes (6) in einer Heizkammer (3) durch Strahlung, mit
- einem Gehäuse (2), das die Heizkammer (3) umschließt,
- wenigstens einem Träger (4) für wenigstens einen Behälter (5) zur Aufnahme des Stoffes (6)
- und einer Bewegungsvorrichtung (10) zum Bewegen des Trägers (4) längs einer Bewegungsbahn in der Heizkammer (3),
wobei zum Bewegen des wenigstens einen Trägers (4) dieser wenigstens zwei Magnete (26a) aufweist und weiterhin wenigstens zwei Antriebsmagnete (26b) vorgesehen sind, die außerhalb des Gehäuses (2) angeordnet und auf einer Bewegungsbahn des Trägers (4) im Wesentlichen entsprechenden Bewegungsbahn bewegbar gelagert sind,
wobei die wenigstens zwei Magnete (26a) und die wenigstens zwei Antriebsmagnete (26b) jeweils sich einander gegenüberliegend angeordnet sind und wenigstens zwei auf der Bewegungsbahn verteilt angeordnete Magnetpaare bilden,
**dadurch gekennzeichnet,**
**dass** die Magnetpaare jeweils mit unterschiedlicher Polung angeordnet sind.

2. Vorrichtung nach Anspruch 1,
**dadurch gekennzeichnet,**
**dass** genau zwei Magnete (26a) und genau zwei Antriebsmagnete (26b) vorgesehen sind.

3. Vorrichtung nach Anspruch 1 oder 2,
**dadurch gekennzeichnet,**
**dass** die Antriebsmagnete (26b) an einem Antriebsdrehteil (27) angeordnet sind, wobei das Antriebsdrehteil (27) in einem Drehlager (14) um eine Drehachse (14a) drehbar gelagert ist.

4. Vorrichtung nach einem der vorhergehenden Ansprüche,
**dadurch gekennzeichnet,**
**dass** die Magnetpaare in der Ebene der Bewegungsbahn gegenüberliegend angeordnet sind.

5. Vorrichtung nach einem der vorhergehenden Ansprüche,
**dadurch gekennzeichnet,**
**dass** die Magnete (26a) und/oder die Antriebsmagnete (26b) Flachmagnete sind.

6. Vorrichtung nach einem der vorhergehenden Ansprüche,
**dadurch gekennzeichnet,**
**dass** die Antriebsmagnete (26b) an einem Magnethalter angeordnet sind und dass wenigstens der Träger (4) oder auch der Magnethalter um eine im Wesentlichen vertikale Drehachse (12a, 13a) drehbar gelagert sind.

7. Verfahren zum Erwärmen wenigstens eines Stoffes (6) in einer Heizkammer (3) durch Strahlung,
wobei der Stoff in wenigstens einem Behälter (5) vorliegt, der in der Heizkammer (3) bewegt wird,
wobei der Behälter (5) mittelbar oder unmittelbar durch magnetischen Durchgriff durch eine Begrenzungswand der Heizkammer (3) bewegt wird,
wobei der magnetische Durchgriff mit wenigstens zwei Magneten (26a) und wenigstens zwei Antriebsmagneten (26b) erfolgt,
wobei die wenigstens zwei Magnete (26a) und die wenigstens zwei Antriebsmagnete (26b) jeweils sich einander gegenüberliegend angeordnet sind und Magnetpaare bilden,
**dadurch gekennzeichnet,**
**dass** die Magnetpaare jeweils mit unterschiedlicher Polung angeordnet sind.

8. Verfahren nach Anspruch 7,
**dadurch gekennzeichnet,**
**dass** der Behälter (5) von einem Träger (4) getragen wird und der Träger (4) um eine erste Drehachse (12a) gedreht wird.

9. Verfahren nach Anspruch 8,
**dadurch gekennzeichnet,**
**dass** der Träger (4) gleichzeitig um eine zur ersten Drehachse (12a) exzentrischen zweiten Drehachse (13a) bewegt wird.

10. Verfahren nach einem der Ansprüche 7 bis 9,
**dadurch gekennzeichnet,**
**dass** der magnetische Durchgriff mithilfe wenigstens eines Antriebsmagneten (26b) erfolgt, der außerhalb eines die Heizkammer (3) umschließenden Gehäuses (2) bewegt wird.

11. Verfahren nach Anspruch 7,
**dadurch gekennzeichnet,**
**dass** mittels des magnetischen Durchgriffs eine Positionierung eines Trägers für den wenigstens einen Behälter erfolgt.

12. Verfahren nach Anspruch 1
wobei der magnetische Durchgriff zur Positionscodierung verwendet wird.

## Claims

1. Apparatus for heating at least one substance (6) in a heating chamber (3) by radiation, comprising
- a housing (2), which encloses the heating chamber (3),
- at least one carrier (4) for at least one container (5) for receiving the substance (6),
- and a motion device (10) for moving the carrier (4) along a path of motion in the heating chamber (3),
wherein, for the purpose of moving the at least one carrier (4), the latter has at least two magnets (26a), and there are additionally provided at least two driving magnets (26b) which are disposed outside the housing (2) and mounted so as to be movable on a path of motion that corresponds substantially to the path of motion of the carrier (4),
wherein the at least two magnets (26a) and the at least two driving magnets (26b) are respectively disposed opposite each other and constitute at least two magnet pairs disposed in a distributed manner on the path of motion,
**characterized in that**
the magnet pairs are respectively disposed with differing polarity.

2. Apparatus according to claim 1
**characterized in that**
exactly two magnets (26a) and exactly two driving magnets (26b) are provided.

3. Apparatus according to either of claims 1 or 2,
**characterized in that**
the driving magnets (26b) are disposed on a rotary driving part (27), the rotary driving part (27) being mounted in a rotary bearing (14) so as to be rotatable about an axis of rotation (14a).

4. Apparatus according to any one of the preceding claims,
**characterized in that**
the magnet pairs are disposed oppositely in the plane of the path of motion.

5. Apparatus according to any one of the preceding claims,
**characterized in that**
the magnets (26a) and/or the driving magnets (26b) are flat magnets.

6. Apparatus according to any one of the preceding claims,
**characterized in that**
the driving magnets (26b) are disposed on a magnet holder, and at least the carrier (4) or, also, the magnet holder is/are mounted so as to be rotatable about a substantially vertical axis of rotation (12a, 13a).

7. Method for heating at least one substance (6) in a heating chamber (3) by radiation,
wherein the substance is present in at least one container (5) which is moved in the heating chamber (3),
wherein the container (5) is moved directly or indirectly by magnetic penetration through a boundary wall of the heating chamber (3),
wherein the magnetic penetration is effected by means of at least two magnets (26a) and at least two driving magnets (26b),
wherein the at least two magnets (26a) and the at least two driving magnets (26b) are respectively disposed opposite each other and constitute magnet pairs,
**characterized in that**
the magnet pairs are respectively disposed with differing polarity.

8. Method according to claim 7,
**characterized in that**
the container (5) is carried by a carrier (4), and the carrier (4) is rotated about a first axis of rotation (12a).

9. Method according to claim 8,
**characterized in that**
the carrier (4) is simultaneously moved about a second axis of rotation (13a) that is eccentric relative to the first axis of rotation (12a).

10. Method according to any one of claims 7 to 9,
**characterized in that**
the magnetic penetration is effected by means of at least one driving magnet (26b) which is moved outside a housing (2) enclosing the heating chamber (3).

11. Method according to claim 7,
**characterized in that**
positioning of a carrier for the at least one container is effected by means of the magnetic penetration.

12. Method according to claim 1,
wherein the magnetic penetration is used for position coding.

## Revendications

1. Dispositif pour chauffer au moins une matière (6) dans une chambre de chauffe (3) par rayonnement, comprenant
- une enveloppe (2) qui entoure la chambre de chauffe (3),
- au moins un support (4) pour au moins un récipient (5) destiné à recevoir la matière (6),
- et au moins un dispositif de déplacement (10) destiné à mettre le support (4) en mouvement le long d'une trajectoire dans la chambre de chauffe (3),
dans lequel, pour le déplacement de l'au moins un support (4), ce dernier présente au moins deux aimants (26a) et en outre, il est prévu au moins deux aimants d'entraînement (26b) qui sont disposé à l'extérieur de l'enveloppe (2) et montés sur une trajectoire correspondant sensiblement à la trajectoire du support (4),
dans lequel les au moins deux aimants (26a) et les au moins deux aimants d'entraînement (26b) sont disposés respectivement face à face et forment au moins deux paires d'aimants réparties sur la trajectoire,
**caractérisé**
**en ce que** les paires d'aimants sont disposées chacune avec une polarité différente.

2. Dispositif selon la revendication 1,
**caractérisé**
**en ce qu'**il est prévu exactement deux aimants (26a) et exactement deux aimants d'entraînement (26b).

3. Dispositif selon la revendication 1 ou 2,
**caractérisé**
**en ce que** les aimants d'entraînement (26b) sont associés à un élément d'entraînement tournant (27), l'élément d'entraînement tournant (27) étant monté pivotant autour d'un axe de rotation (14a) dans un palier de rotation (14).

4. Dispositif selon une des revendications précédentes,
**caractérisé**
**en ce que** les paires d'aimants sont disposées face à face dans le plan de la trajectoire.

5. Dispositif selon une des revendications précédentes,
**caractérisé**
**en ce que** les aimants (26a) et/ou les aimants d'entraînement (26b) sont des aimants plats.

6. Dispositif selon une des revendications précédentes,
**caractérisé**
**en ce que** les aimants d'entraînement (26b) sont montés sur un support d'aimants et en ce qu'au moins le support (4) ou aussi le support d'aimants sont montés pivotants autour d'un axe de rotation sensiblement vertical (12a, 13a).

7. Procédé pour chauffer au moins une matière (6) dans une chambre de chauffe (3) par rayonnement,
dans lequel la matière se trouve dans au moins un récipient (5) qui est entraîné en mouvement dans la chambre de chauffe (3), le récipient (5) étant entraîné en mouvement indirectement ou directement par une action magnétique traversante à travers une paroi de limitation de la chambre de chauffe (3),
l'action magnétique traversante s'effectuant avec au moins deux aimants (26a) et au moins deux aimant d'entraînement (26b),
les au moins deux aimants (26a) et les au moins deux aimants d'entraînement (26b) étant disposés face à face et formant des paires d'aimants,
**caractérisé**
**en ce que** les paires d'aimants sont disposées chacune avec une polarité différente.

8. Procédé selon la revendication 7,
**caractérisé**
**en ce que** le récipient (5) est porté par un support (4) et le support (4) est entraîné en rotation autour d'un premier axe de rotation (12a).

9. Procédé selon la revendication 8,
**caractérisé**
**en ce que** le support (4) est mis simultanément en mouvement autour d'un deuxième axe de rotation (13a) excentré par rapport au premier axe de rotation (12a).

10. Procédé selon une des revendications 7 à 9,
**caractérisé**
**en ce que** l'action magnétique traversante s'effectue au moyen d'un aimant d'entraînement (26b) qui est entraîné en mouvement à l'extérieur d'une enveloppe (2) qui entoure la chambre de chauffe (3).

11. Procédé selon la revendication 7,
**caractérisé**
**en ce qu'**un positionnement d'un support pour l'au moins un récipient s'effectue à l'aide de l'action magnétique traversante.

12. Procédé selon la revendication 1, **caractérisé en ce que**
l'action magnétique traversante est utilisée pour le codage du positionnement.
